# EUROPEAN PATENT SPECIFICATION

(11) **EP 2 570 278 B1**
(45) Date of publication and mention of the grant of the patent: **16.12.2015**
(21) Application number: 10847828.0
(22) Date of filing: 24.12.2010
(51) Int. Cl.: B60H 1/00

(54) **VEHICLE AIR CONDITIONING UNIT**
FAHRZEUG-KLIMAANLAGENEINHEIT
UNITÉ DE CLIMATISATION DE VÉHICULE

(30) Priority: 15.03.2010 JP 2010057566
(43) Date of publication of application: 20.03.2013
(73) Proprietor: Valeo Japan Co., Ltd., Saitama 360-0193 (JP)
(72) Inventor: NAGANO, Hideki, Kumagaya-shi Saitama 360-0193 (JP); ARAKI, Daisuke, Kumagaya-shi Saitama 360-0193 (JP); TAKAHASHI, Osamu, Kumagaya-shi Saitama 360-0193 (JP)
(74) Representative: Delplanque, Arnaud
(86) International application number: PCT/JP2010/007464
(87) International publication number: WO 2011/114410

(56) References cited:
- DE-A1- 19 756 166
- DE-A1-102006 015 660
- JP-A- 10 250 342
- JP-A- H09 188 123
- JP-A- 2001 206 044
- JP-A- 2002 293 128
- JP-A- 2006 036 004
- JP-U- 63 054 505
- US-A1- 2010 043 470

## Description

### Technical Field

The present invention relates to an air conditioning unit where at least a portion of an air flow passage ranging from a leeward side of a blower to a windward side of a heat exchanger arranged on the first position on a leeward side of the blower is divided in two, and an air conditioning unit is mounted in a vehicle, for example, as disclosed in US 2010/0043470 A1.

### Background Art

With respect to this type of air conditioning device for a vehicle, as disclosed in patent document 1, there has been already known the structure where a blower unit in which a blower and the like are housed, a cooling unit in which a heat exchanger for cooling and the like are housed, and a heater unit in which a heat exchanger for heating and the like are housed are arranged in an offset manner. Here, a partition plate is arranged in the inside of a casing of the blower unit in such a manner that the partition plate extends from a leeward side of the blower to a connecting port with the cooling unit, and a partition plate is arranged in the inside of a casing of the cooling unit in such a manner that the partition plate extends from a connecting port with a blower unit side to a windward side of the heat exchanger for cooling thus dividing an air flow passage into an air flow passage where air which passes through an upper air passage portion of the heat exchanger for cooling flows and an air flow passage where air which passes through a lower air passage portion of the heat exchanger for cooling flows.

On the other hand, as disclosed in patent document 2 and patent document 3, there has been known a vertically installed flue-body-type air conditioning unit where, to allow the air conditioning unit to be housed even in a space in a vehicle front-side portion which is relatively narrow, an air flow passage which makes air flow in an approximately U shape in a unit case is defined in the unit case, and a blower, a heat exchanger for cooling and a heat exchanger for heating are arranged in the inside of the air flow passage such that the blower is arranged above the heat exchanger for cooling and the heat exchanger for heating in the vehicle vertical direction. The use of such an air conditioning unit has become more common recently.

Further, the air conditioning unit disclosed in patent document 2 includes, as shown in Fig. 7 of patent document 2, as the structure where two blowers are arranged on a most windward side of the air flow passage in the unit case along the vehicle widthwise direction and air introducing ports open in the unit case in the form that the air introducing ports are arranged parallel to each other along the vehicle widthwise direction, an air flow passage where air introduced from both air introducing ports flows toward a center side from both sides in the vehicle widthwise direction along the axial direction of a drive motor of the blower and, thereafter, air flows along the vehicle widthwise direction and toward the heat exchanger for cooling on a lower side of the vehicle.

### Citation List

### Patent Literature

Patent document 1: JP-A-5-124426
Patent document 2: JP-A-2005-297792
Patent document 3: JP-A-9-188123

### Summary of Invention

### Technical Problem

Along with the recent increase in interest in global environmental problems, a hybrid type automobile which aims at the synergistic use of an engine which uses a fossil fuel such as a gasoline engine and an electric motor as a power source has been developed. Along with the development of such an automobile, an engine operating time is relatively shortened. In an air conditioning device which makes use of cooling water for the engine as a heat exchange medium for heating, heating ability in the inside of a cabin is lowered. Further, in an electric automobile in which an engine is not mounted, both cooling and heating of the inside of the cabin are also performed by electricity. This inefficient use of electricity directly brings about the shortening of a vehicle traveling distance and hence, there has been a demand for the enhancement of efficiency of an air conditioning device.

To this end, also in an air conditioning unit mounted in a hybrid-type automobile or an electric automobile, due to the necessity of increasing heating efficiency in the inside of a cabin without leaking warm air and the necessity of simultaneously suppressing the formation of a film of moisture on a window glass of the automobile, for blowing off outside air which has relatively low humidity from a defrost blow-off port and for blowing off inside air which has relatively high humidity from a foot blow-off port, in the same manner as the above-mentioned patent document 1, there has been a demand for dividing an air flow passage in which a heat exchanger for cooling and a heat exchanger for heating are housed into two layers arranged in the vehicle vertical direction by partitioning using a dividing portion.

However, the vertically installed flue-body-type air conditioning unit disclosed in patent document 2 and patent document 3 has the structure where airs which are introduced into the unit case from the air introducing ports form the flow of air such that these airs flow so as to approach each other from both sides in the vehicle widthwise direction along the axial direction of a rotary shaft of a motor which drives the blower and, thereafter, flow along the vehicle vertical direction. Accordingly, the air flow passage for air blown out from the blower has a vehicle right-side flow passage and a vehicle left-side flow passage where air flows toward a lower side from an upper side of the vehicle while being arranged in the vehicle widthwise direction on a windward side of the heat exchanger for cooling.

Accordingly, in forming the vehicle upper-side flow passage where air which passes through a vehicle upper-side portion of an evaporator flows and a vehicle lower-side flow passage where air which passes through a vehicle lower-side portion of the evaporator flows in a unit case in the vertically installed flue-body-type air conditioning unit disclosed in patent document 2, to make air flow smoothly toward the vehicle upper-side flow passage and the vehicle lower-side flow passage from the vehicle right-side flow passage and the vehicle left-side flow passage of the air flow passage, it is necessary to adjust the difference between the arrangement of the vehicle right-side flow passage and the vehicle left-side flow passage in the vehicle widthwise direction and the arrangement of the vehicle upper-side flow passage and the vehicle lower-side flow passage in the vehicle vertical direction. The necessity of adjustment of the difference of the arrangement also exists in the vertically installed flue-body-type air conditioning unit disclosed in patent document 3.

Accordingly, it is an object of the present invention to provide an air conditioning unit for a vehicle which can, when the air conditioning unit for a vehicle adopts the structure where an air introducing port is arranged on both sides in the axial direction of a rotary shaft of a drive motor of a blower, and the air conditioning unit has a dividing portion which partitions a heat exchanger into a vehicle upper-side portion and a vehicle lower-side portion or into a vehicle front-side portion and a vehicle rear-side portion, adjust the difference of the arrangement between the arrangement in the vehicle widthwise direction of a vehicle right-side flow passage and a vehicle left-side flow passage which an air flow passage has on a leeward side of a blower and the arrangement of one portion and the other portion of an air passage portion of a heat exchanger.

### [Solution to Problem]

An air conditioning unit for a vehicle according to the present invention includes: a first air introducing port which opens on one side of a unit case in the vehicle widthwise direction; a second air introducing port which opens on the other side of the unit case in the vehicle widthwise direction; a blower which is constituted of an impeller; and a drive motor which has a rotary shaft along the vehicle widthwise direction and imparts a rotational force to the impeller, the blower being housed in the unit case at a position between the first air introducing port and the second air introducing port; an air flow passage which is formed in the unit case and through which air introduced from the air introducing port through the blower flows; and a heat exchanger which is housed in the air flow passage in a state where the heat exchanger is arranged below the blower, the heat exchanger having an air passage portion where a heat exchange with air which flows through the air flow passage is performed, wherein an air flow direction change member is housed in an air flow passage portion of the air flow passage between a leeward side of the blower and a windward side of the heat exchanger, the air flow direction change member includes: a first dividing portion which divides the air flow passage portion into a vehicle-right-side flow passage portion which is on a right side in the vehicle widthwise direction and a vehicle-left-side flow passage portion which is on a left side in the vehicle widthwise direction such that air which is introduced from one air introducing port out of the first and second air introducing ports and air which is introduced from the other air introducing port out of the first and second air introducing ports flow individually parallel to each other in the vehicle widthwise direction; a second dividing portion which divides the air flow passage portion into a first air flow passage portion and a second air flow passage portion at upstream of the heat exchanger and downstream of the first dividing portion such that the air which is introduced from one air introducing port out of the first and second air introducing ports passes a portion of the air passage portion of the heat exchanger, and air which is introduced from the other air introducing port and does not pass through the portion of the air passage portion of the heat exchanger passes through other portions of the air passage portion of the heat exchanger; a first change portion which introduces air flowing through the vehicle-right-side flow passage portion into one of the first and second air flow passage portions; and a second change portion which introduces air flowing through the vehicle-left-side flow passage portion into the other of the first and second air flow passage portions (Claim 1).

To be more specific, the air conditioning unit for a vehicle is characterized in that, in the air flow direction change member according to the present invention, the second dividing portion divides the air flow passage into a vehicle-upper-side flow passage portion which is on an upper side in the vehicle vertical direction and a vehicle-lower-side flow passage portion which is on a lower side in the vehicle vertical direction such that the air which is introduced from one air introducing port out of the first and second air introducing ports passes the air passage portion of the heat exchanger, and air which is introduced from the other air introducing port and does not pass through an upper-side air passage portion of the heat exchanger passes through a lower-side air passage portion of the heat exchanger, the first change portion introduces air flowing through the vehicle-right-side flow passage portion into one of the vehicle-upper-side flow passage portion and the vehicle-lower-side flow passage portion, and the second change portion introduces air flowing through the vehicle-left-side flow passage portion into the other of the vehicle-upper-side flow passage portion and the vehicle-lower-side flow passage portion (Claim 2).

Alternatively, the air conditioning unit for a vehicle is characterized in that, in an air flow direction change member according to the present invention, the second dividing portion divides the air flow passage into a vehicle rear-side flow passage portion which is on a rear side in the vehicle longitudinal direction and a vehicle front-side flow passage portion which is on a front side in the vehicle longitudinal direction such that air introduced from one air introducing port out of the first and second air introducing ports passes through an air passage portion of the heat exchanger, and air which is introduced from the other air introducing port and does not pass through a rear-side air passage portion of the heat exchanger passes through a front-side air passage portion of the heat exchanger, the first change portion introduces the air flowing through the vehicle right-side flow passage portion into one of the vehicle rear-side flow passage portion and the vehicle front-side flow passage portion, and the second change portion introduces the air flowing through the vehicle left-side flow passage portion into the other of the vehicle rear-side flow passage portion and the vehicle front-side flow passage portion (claim 3).

Here, the air conditioning unit for a vehicle is a vertically installed flue-body-type air conditioning unit which is provided at the center of the vehicle in the widthwise direction, for example. Further, the heat exchanger is the heat exchanger which is firstly positioned on a leeward side of the blower and, for example, a heat exchanger for cooling such as an evaporator is named. The same goes for the air conditioning units for a vehicle described hereinafter.

Due to such a constitution, air introduced into the unit case from the air introducing port via the blower flows in parallel along the vehicle widthwise direction in the vehicle right-side flow passage and the vehicle left-side flow passage on a leeward side of the blower out of the air flow passage. For example, when outside air from the outside of a cabin flows into the vehicle right-side flow passage portion and inside air from the inside of the cabin flows into the vehicle left-side flow passage portion, as the airs flow into the air flow passage portion where the air flow direction change member is housed out of the air flow passage, the whole or a portion of outside air which advances in the vehicle right-side flow passage portion from the vehicle right-side flow passage by being guided by the first dividing portion is changed to a flow which is directed toward a vehicle upper portion side of the heat exchanger from a flow which is directed toward a vehicle lower portion side of the heat exchanger or is changed to a flow which is directed toward a vehicle rear portion side of the heat exchanger from a flow which is directed toward a vehicle lower portion side of the heat exchanger by a first change portion and, thereafter, reaches the vehicle upper portion side of the heat exchanger or the vehicle rear portion side of the heat exchanger by being guided by the second dividing portion. The whole or a portion of inside air which advances in the vehicle left-side flow passage portion from the vehicle left-side flow passage portion by being guided by the first dividing portion is changed to a flow which is directed toward the vehicle lower portion side of the heat exchanger from a flow which is directed toward the vehicle upper portion side of the heat exchanger or is changed to a flow which is directed toward the vehicle front portion side of the heat exchanger from a flow which is directed toward the vehicle upper portion side of the heat exchanger by the second change portion and, thereafter, reaches the vehicle lower portion side of the heat exchanger or the vehicle front portion side of the heat exchanger by being guided by the second dividing portion. In this case, inside air from the inside of the cabin may be allowed to flow also into the vehicle right-side flow passage by an inside air/outside air switching device. Further, when the air flow passage is configured such that the vehicle right-side flow passage and the vehicle lower-side flow passage or the vehicle front-side flow passage are formed continuously and the vehicle left-side flow passage and the vehicle upper-side flow passage or the vehicle rear-side flow passage are formed continuously, outside air or inside air may be allowed to flow into the vehicle left-side flow passage, and inside air may be allowed to flow into the vehicle right-side flow passage.

Further, an air conditioning unit for a vehicle includes: a first air introducing port which opens on one side of a unit case in the vehicle widthwise direction; a second air introducing port which opens on the other side of the unit case in the vehicle widthwise direction; a blower which is constituted of an impeller; and a drive motor which has a rotary shaft along the vehicle widthwise direction and imparts a rotational force to the impeller, the blower being housed in the unit case at a position between the first air introducing port and the second air introducing port; an air flow passage which is formed in the unit case and through which air introduced from the air introducing port through the blower flows; and a heat exchanger which is housed in the air flow passage in a state where the heat exchanger is arranged below the blower, the heat exchanger having an air passage portion where a heat exchange with air which flows through the air flow passage is performed, wherein the air flow passage includes: a first air flow passage portion which is positioned between a leeward side of the blower and a windward side of the heat exchanger, and in which air introduced from one air introducing port out of the first and second air introducing ports flows so as to pass through a portion of an air passage portion of the heat exchanger; and a second air flow passage portion which is positioned between the leeward side of the blower and the windward side of the heat exchanger, and in which air introduced from the other air introducing port out of the first and second air introducing ports flows so as to pass through the other portion of the air passage portion of the heat exchanger, and a blower-side end portion of one air flow passage portion out of the first and second air flow passage portions is displaced from a blower-side end portion of the other air flow passage portion in the vehicle advancing direction. To be more specific, the air conditioning unit for a vehicle is characterized in that the first air flow passage portion is bent toward an upper side in the vehicle vertical direction as the first air flow passage portion extends toward a blower side from an upper air passage portion of the heat exchanger, and the second air flow passage portion is bent toward an upper side in the vehicle vertical direction as the second air flow passage portion extends toward the blower side from a lower air passage portion of the heat exchanger so that the blower-side end portion of the first air flow passage portion is displaced from the blower-side end portion of the second air flow passage portion in the vehicle advancing direction.

Due to such a constitution, a portion of the first air flow passage portion immediately behind a leeward side of one impeller of the blower and a portion of the second air flow passage portion immediately behind a leeward side of the other impeller of the blower overlap with each other in a different manner in the longitudinal direction along the vehicle advancing direction, and the first air flow passage portion extends toward the heat exchanger while keeping an overlapping state such that the first air flow passage portion is arranged more on an upper layer side or more on a vehicle rear side than the second air flow passage portion. Accordingly, outside air reaches a vehicle upper portion side of a leeward-side air passage surface of the heat exchanger or a vehicle rear portion side of a windward-side air passage surface of the heat exchanger in such a manner that outside air is introduced into the first air flow passage portion by one blower, and only advances in the first air flow passage portion downwardly in the vehicle vertical direction while being bent or only advances directly downwardly, while inside air reaches a vehicle lower portion side of a windward-side air passage surface of the heat exchanger or the vehicle front portion side of a windward-side air passage surface of the heat exchanger in such a manner that the inside air is introduced into the second air flow passage portion by the other blower, and only advances in the second air flow passage portion downwardly in the vehicle vertical direction or only advances directly downwardly.

The blower may be constituted of an impeller and one drive motor which drives the impeller (claim 4) or the blower may be constituted of two impellers and one drive motor arranged between the impellers (claim 5).

### Advantageous Effects of Invention

As described above, according to the inventions described in claim 1 to claim 3, in the case where the air flow direction change member is housed in the air flow passage portion of the air flow passage formed in the unit case between a leeward side of the blower and a windward side of the heat exchanger, and outside air flows in the vehicle right-side flow passage portion out of the vehicle right-side flow passage portion and the vehicle left-side flow passage portion arranged parallel to each other in the vehicle widthwise direction and inside air flows into the vehicle left-side flow passage portion, the whole or a portion of the outside air which advances in the vehicle right-side flow passage portion from the vehicle right-side flow passage portion by being guided by the first dividing portion is changed to a flow which is directed toward the vehicle upper portion side of the heat exchanger from a flow which is directed toward the vehicle lower portion side of the heat exchanger or is changed to a flow which is directed toward a vehicle rear portion side of the heat exchanger from a flow which is directed toward a vehicle lower portion side of the heat exchanger by the first change portion and, thereafter, the whole or a portion of the outside air is guided to the vehicle upper portion side of the heat exchanger or the vehicle rear portion side of the heat exchanger by the second dividing portion. The whole or a portion of the inside air which advances in the vehicle left-side flow passage portion from the vehicle left-side flow passage portion by being guided by the first dividing portion is changed to a flow which is directed toward the vehicle lower portion side of the heat exchanger from a flow which is directed toward the vehicle upper portion side of the heat exchanger or is changed to a flow which is directed toward a vehicle front portion side of the heat exchanger from a flow which is directed toward a vehicle upper portion side of the heat exchanger by the second change portion and, thereafter, the whole or a portion of the inside air is guided to the vehicle lower portion side of the heat exchanger or the vehicle front portion side of the heat exchanger by the second dividing portion. Accordingly, the difference between the arrangement in the vehicle widthwise direction of the vehicle right-side flow passage and the vehicle left-side flow passage which the air flow passage includes on a leeward side of the blower and the arrangement of one portion and the other portion of the air passage portion of the heat exchanger can be adjusted. Particularly, according to the invention described in claim 2, the difference between the arrangement in the vehicle widthwise direction of the vehicle right-side flow passage and the vehicle left-side flow passage which the air flow passage includes on a leeward side of the blower and the arrangement in the vehicle vertical direction of the vehicle upper-side flow passage and the vehicle lower-side flow passage which the air flow passage includes on a windward side of the heat exchanger can be adjusted. Further, particularly, according to the invention described in claim 3, the difference of the arrangement between the arrangement in the vehicle widthwise direction of the vehicle right-side flow passage and the vehicle left-side flow passage which the air flow passage includes on a leeward side of the blower and the arrangement in the vehicle longitudinal direction of the vehicle front-side flow passage and the vehicle rear-side flow passage which the air flow passage includes on a windward side of the heat exchanger can be adjusted.

Further, according to the inventions described in claim 1 to claim 3, outside air which has relative low humidity is made to flow into one of the first air flow passage portion and the second air flow passage portion and can be guided to the defrost blow-off port so that it is possible to prevent the formation of a film of moisture on a window glass of a vehicle by moisture in blown-off air, while inside air which has relatively high humidity is made to flow into the other of the first air flow passage portion and the second air flow passage portion and can be guided to the foot blown off port so that it is possible to circulate warmed inside air in a cabin.

Further, according to the inventions described in claim 1 to claim 3, although the air conditioning unit is the vertically installed flue-body-type air conditioning unit which is provided at the center of the vehicle in the widthwise direction, for example, the air conditioning unit includes, as the separate structure, the structure where the air introducing port is arranged on both sides of the blower in the axial direction of the rotary shaft of the drive motor, and first and second dividing portions are provided for partitioning the heat exchanger into a vehicle upper-side portion and a vehicle lower-side portion or dividing the heat exchanger into a vehicle front side portion and a vehicle rear-side portion so that the air flow passage is divided and hence, the above-mentioned advantageous effects of the present invention can be acquired by housing the air flow direction change member in the air flow passage portion positioned between a leeward side of the blower of the unit case and a windward side of the heat exchanger in the air flow passage. Accordingly, it is unnecessary to modify the structure of the air conditioning unit for a vehicle per se and, further, the air flow direction change member can be desirably housed and removed when necessary.

Further, a portion of the first air flow passage immediately behind the impeller of one blower on a leeward side and a portion of the second air flow passage immediately behind the impeller of the other blower on a leeward side overlap with each other in a different manner longitudinally along the vehicle advancing direction, and the first air flow passage extends toward the heat exchanger more in an upper layer side or more in a vehicle rear side than the second air flow passage while keeping the overlapping state. Accordingly, outside air is guided to a vehicle upper portion side of the heat exchanger or to a vehicle rear portion side of the heat exchanger in such a manner that the outside air is introduced into the first air flow passage by one blower, and only advances in the first air flow passage downwardly in the vehicle vertical direction while being bent or only advances directly downwardly. On the other hand, inside air is guided to a vehicle lower portion side of the heat exchanger or a vehicle front portion side of the heat exchanger in such a manner that inside air is introduced into the second air flow passage by the other blower, and only advances in the second air flow passage downwardly in the vehicle vertical direction while being bent or only advances directly downwardly. Accordingly, the difference between the arrangement in the vehicle widthwise direction of the vehicle right-side flow passage and the vehicle left-side flow passage which the air flow passage includes on a leeward side of the blower and the arrangement of one portion and the other portion of the air passage portion of the heat exchanger can be adjusted. Particularly, with respect to the invention, the difference between the arrangement in the vehicle widthwise direction of the vehicle right-side flow passage and the vehicle left-side flow passage which the air flow passage includes on a leeward side of the blower and the arrangement in the vehicle vertical direction of the vehicle upper-side flow passage and the vehicle lower-side flow passage which the air flow passage includes on a windward side of the heat exchanger can be adjusted.

Still further, by allowing outside air which has relatively low humidity to flow into the first air flow passage whose arrangement on a heat exchanger side is set relatively on a vehicle upper layer side or a vehicle rear side, outside air can be guided to the defrost blow-off port and hence, it is possible to prevent the formation of a film of moisture on a window glass of a vehicle by moisture in blown-off air, and also by allowing inside air which has relatively high humidity to flow into the second air flow passage whose arrangement on the heat exchanger side is set on a relatively vehicle lower layer side or a vehicle front side, inside air can be made to flow into the foot blown off port whereby warmed inside air can be circulated in a cabin.

Further, according to the invention described in claim 4, the blower includes one impeller and one drive motor and hence, it is possible to provide the air conditioning unit at a relatively low cost.

Further, according to the invention described in claim 5, the blower includes two impellers and the drive motor arranged between the impellers. Since two impellers can respectively suck air from sides opposite to the drive motor and hence, the blower can ensure more excellent air blowing ability than a mode where air is sucked from a drive motor side.

### Brief Description of Drawings

[Fig. 1] Fig. 1 is a schematic view showing one example of the overall constitution of an air conditioning unit according to an embodiment 1 of the present invention.
[Fig. 2] Fig. 2 is a schematic view showing one example which is not covered by the object of the invention, of the constitution of the above air conditioning unit ranging from a blower to a heat exchanger for cooling as viewed in a plan view.
[Fig. 3] Fig. 3 is a schematic view showing one example of the constitution of the above air conditioning unit ranging from the blower to the heat exchanger for cooling as viewed in the oblique direction.
[Fig. 4] Fig. 4 is a schematic view showing another example of the overall constitution of the air conditioning unit according to the embodiment 1 of the present invention with respect to an example shown in Fig. 1.
[Fig. 5] Fig. 5 is a schematic view showing another example of the constitution of the above air conditioning unit ranging from a blower to a heat exchanger for cooling as viewed in the oblique direction shown in Fig. 1.
[Fig. 6] Fig. 6 is an explanatory view showing one example of an air conditioning unit according to an embodiment 2 of the present invention, wherein the constitution ranging from a blower to a heat exchanger for cooling in a mode where an air introducing port is arranged adjacent to the blower and the constitution of an air flow direction change member according to the present invention are shown in a simplified manner.
[Fig. 7] Fig. 7 is an explanatory view showing one example of the air conditioning unit according to the embodiment 2 of the present invention, wherein the constitution ranging from the blower to the heat exchanger for cooling in a mode where the air introducing port is positioned remote from the blower and the constitution of the air flow direction change member according to the present invention are shown in a simplified manner.
[Fig. 8] Fig. 8 is an explanatory view showing still another example of the air conditioning unit according to the embodiment 2 of the present invention shown in Fig. 6, wherein the constitution ranging from an air supply unit portion to a heat exchanger for cooling in a mode where an air introducing port is arranged adjacent to the air supply unit portion and the constitution of an air flow direction change member according to the present invention are shown in a simplified manner.
[Fig. 9] Fig. 9 is an explanatory view showing another example of the air conditioning unit according to the embodiment 2 of the present invention shown in Fig. 7, wherein the constitution ranging from the blower to the heat exchanger for cooling in a mode where the air introducing port is positioned remote from the blower and the constitution of the air flow direction change member according to the present invention are shown in a simplified manner.

### Description of Embodiments

Hereinafter, embodiments of the present invention are explained in conjunction with attached drawings.

### Embodiment 1

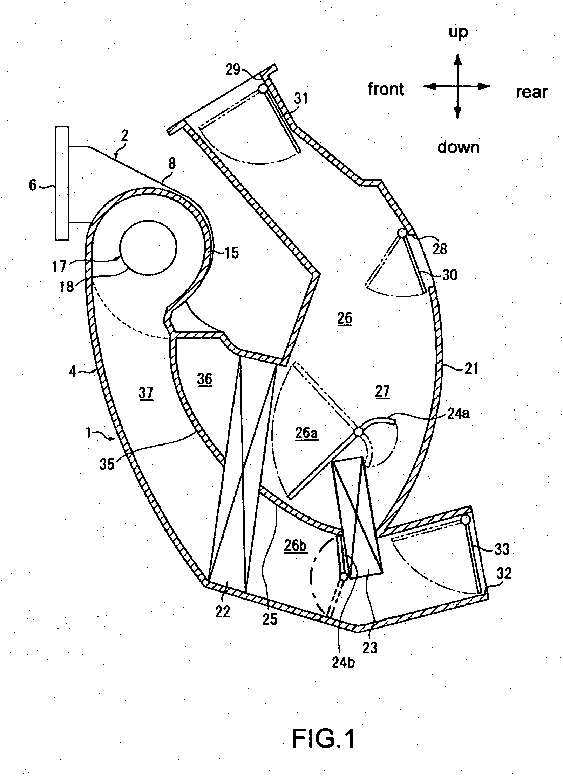

In Fig. 1 to Fig. 3, one example of the constitution of an air conditioning unit for a vehicle according to an embodiment 1 of the present invention is shown. The air conditioning unit 1 for a vehicle is a vertically installed flue-body-type air conditioning unit which is mounted on a center console portion of a vehicle, and is arranged on a side closer to a cabin than a partition plate which partitions an engine room and the cabin is.

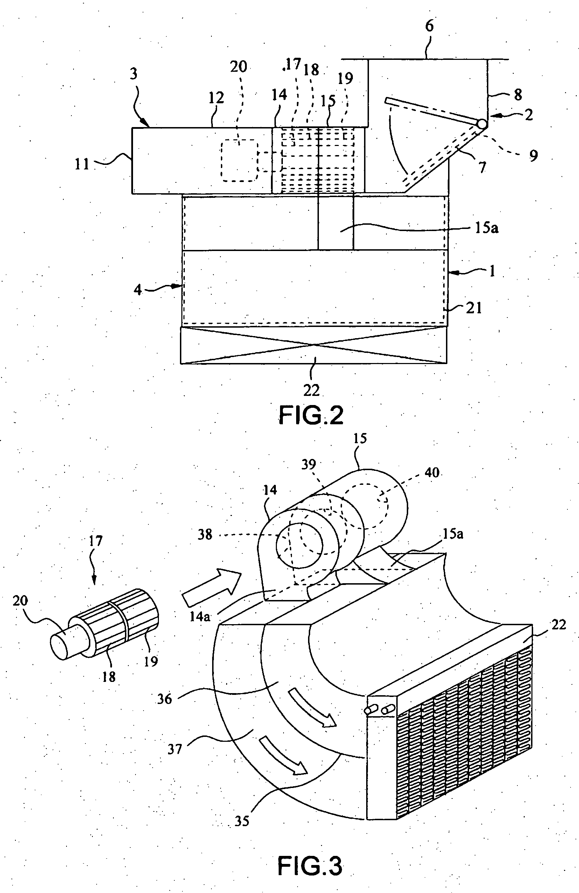

Further, the air conditioning unit 1 for a vehicle is, as shown in Fig. 2, basically constituted of an inside air/outside air switching box 2, an inside air introducing duct 3, and an air conditioning unit body 4.

As shown in Fig. 2, in the inside air/outside air a box 2, an outside air introducing port 6 which faces an engine room side and an inside air introducing port 7 which faces a cabin side are formed in a case 8, and an inside air/outside air switching door 9 for suitably selecting these outside and inside air introducing ports 6, 7 is housed in the case 8. Further, in the inside air introducing duct 3, as shown in Fig. 2, an inside air introducing port 11 which faces the cabin side is formed in a case 12.

As shown in Fig. 2, the air conditioning unit body 4 is communicably connected with both the inside air/outside air switching box 2 and the inside air introducing duct 3 in an offset manner along the vehicle widthwise direction, and includes two air supply unit portions 14, 15 described later. As shown in Fig. 2 and Fig. 3, in the air supply unit portions 14, 15, a blower 17 which is constituted of two impellers 18, 19 and one drive motor 20 connected to the impellers 18, 19 by way of a rotary shaft and rotates the impellers 18, 19 is housed. In this embodiment, the inside air/outside air switching box 2 is arranged on a right side in the vehicle widthwise direction (driver's seat side) with respect to the air conditioning unit body 4, and the inside air introducing duct 3 is arranged on a left side in the vehicle widthwise direction (a passenger seat side) with respect to the air conditioning unit body 4, and the blower 17 is arranged in a horizontally laid state such that the axial direction of the rotary shaft of the drive motor 20 substantially follows the vehicle widthwise direction.

Further, the air conditioning unit body 4 includes, in the inside of a unit case 21, a heat exchanger 22 for cooling such as an evaporator which cools air supplied from the air supply unit portions 14, 15, a heat exchanger 23 for heating such as a heater core which heats air cooled by the heat exchanger 22 for cooling, and air mix doors 24a, 24b which are arranged between the heat exchanger 22 for cooling and the heat exchanger 23 for heating within an air flow passage portion 26a for allowing air to pass through an upper side of the heat exchanger for heating described later and adjust a ratio between air supplied to the heat exchanger 23 for heating and air which bypasses the heat exchanger 23 for heating. Further, with respect to an air flow passage 26 which is formed in the unit case 21, a portion of the air flow passage 26 ranging from an intermediate position of a leeward-side air passage surface of the heat exchanger 22 for cooling in the vehicle vertical direction to an intermediate position of a windward-side air passage surface of the heat exchanger 23 for heating in the vehicle vertical direction is partitioned into the air flow passage portion 26a to allow air to pass through an upper side of the heat exchanger for heating and an air flow passage portion 26b to allow air to pass through a lower side of the heat exchanger for heating by a partition portion 25.

The air flow passage portion 26a for allowing air to pass through an upper side of the heat exchanger for heating is a portion into which air which passes through the vehicle-upper-side portion of the air passage surface of the heat exchanger 22 for cooling flows. The air flow passage portion 26a for allowing air to pass through an upper side of the heat exchanger for heating includes an air mix door 24a and an air mix chamber 27 where hot air which is heated by passing through vehicle-upper-side portions of both air passage surfaces of the heat exchanger 23 for heating and cold air which bypasses the heat exchanger 23 for heating thus being kept cooled by the heat exchanger 22 for cooling are mixed together downstream of the heat exchanger 23 for heating. A mixing ratio between cold air and hot air is adjusted by making the air mix door 24a perform a suitable operation such as rotation. Further, in the air flow passage portion 26a for allowing air to pass through an upper side of the heat exchanger for heating, a vent blowoff opening portion 28 and a defrost blowoff opening portion 29 are opened more on a leeward side than the air mix chamber 27 is, and the vent blowoff opening portion 28 and the defrost blowoff opening portion 29 are communicably connected with a vent blowoff port and a defrost blowoff port not shown in the drawing respectively by way of ducts not shown in the drawing. In this embodiment, mode doors 30, 31 for opening and closing the vent blowoff opening portion 28 and the defrost blowoff opening portion 29 are respectively arranged in the vicinity of openings of the vent blowoff opening portion 28 and the defrost blowoff opening portion 29.

The air flow passage portion 26b for allowing air to pass through a lower side of the heat exchanger for heating is a portion into which air which passes through a vehicle-lower-side portion of an air passage surface of the heat exchanger 22 for cooling flows. By making the air mix door 24b perform a suitable operation such as rotation, cold air which is cooled by the heat exchanger 22 for cooling can be heated by making cold air to pass through vehicle-lower-side portions of both air passage surfaces of the heat exchanger 23 for heating. Further, a foot blowoff opening portion 32 is formed on a most leeward side of the air flow passage portion 26b for allowing air to pass through a lower side of the heat exchanger for heating, and a mode door 33 for opening and closing the foot blowoff opening portion 32 is arranged in the vicinity of the foot blowoff opening portion 32.

Here, an air flow passage portion of the air flow passage 26 arranged on a windward side of the heat exchanger 22 for cooling and on a leeward side of the blower 17 is, as shown in Fig. 1 and Fig. 3, divided into a first air flow passage portion 36 and a second air flow passage portion 37 by a dividing portion 35. A leeward-side end of the first air flow passage portion 36 is connected with an upper-side portion of a windward-side air passage surface of the heat exchanger 22 for cooling in the vehicle vertical direction, and a windward-side end of the first air flow passage portion 36 is directed upwardly in the vehicle vertical direction. That is, the first air flow passage portion 36 has the structure where the first air flow passage portion 36 extends upwardly while being bent as the first air flow passage portion 36 extends from the leeward side to the windward side (toward a front side in the vehicle advancing direction). A leeward-side end of the second air flow passage portion 37 is connected with a lower portion of a windward-side air passage surface of the heat exchanger 22 for cooling in the vehicle vertical direction, a windward-side end of the second air flow passage portion 37 is directed upwardly in the vehicle vertical direction, and the windward-side end of the second air flow passage portion 37 is positioned more on a front side in the vehicle advancing direction than a windward-side end of the first air flow passage portion 36. That is, the second air flow passage portion 37 has the structure where the second air flow passage portion 37 extends upwardly while being bent in the vehicle vertical direction along bending of the first air flow passage portion 36 from a position disposed below the first air flow passage portion 36.

As shown in Fig. 1, since the partition portion 25 exists on the extension of the dividing portion 35, the windward-side end of the first air flow passage portion 36 agrees with the windward-side end of the air flow passage portion 26a for allowing air to pass through an upper side of the heat exchanger for heating so that only air from the first air flow passage portion 36 is supplied to the air flow passage portion 26a for allowing air to pass through an upper side of the heat exchanger for heating, while the windward-side end of the second air flow passage portion 37 agrees with the windward-side end of the air flow passage portion 26b for allowing air to pass through a lower side of the heat exchanger for heating so that only air from the second air flow passage portion 37 is supplied to the air flow passage portion 26b for allowing air to pass through a lower side of the heat exchanger for heating.

Further, opening portions 38, 39, 40 are coaxially formed in the air supply unit portion 14 and the air supply unit portion 15 for housing the blower 17. A nose portion 14a of the air supply unit portion 14 extends directly below in the vehicle vertical direction and is connected with the windward-side end of the second air flow passage 37, and a nose portion 15a of the air supply unit portion 15 extends obliquely toward a rear side in the vehicle advancing direction and is connected with the windward-side end of the first air flow passage 36.

As shown in Fig. 2, according to the air conditioning unit 1 for a vehicle having the above-mentioned constitution, by connecting the inside air/outside air switching box 2 to the air supply unit portion 15, and by connecting the inside air introducing duct 3 to the air supply unit portion 14, for example, outside air having relatively low humidity flows through the inside air/outside air switching box 2, the air supply unit portion 15 and the first air flow passage 36 from the outside air introducing port 6. When the outside air passes through the air flow passage portion 26a for allowing air to pass through an upper side of the heat exchanger for heating, a temperature of the outside air is suitably regulated by the heat exchanger 22 for cooling and the heat exchanger 23 for heating and, thereafter, the outside air is fed to the defrost blowoff port from the defrost blowoff opening portion 29. Accordingly, it is possible to prevent the formation of a film of moisture on a window glass of a vehicle by moisture in air from the defrost blowoff port. Further, for example, inside air having relatively high humidity flows through the inside air introducing duct 3, the air supply unit portion 14, and the second air flow passage portion 37 from the inside air introducing port 11. When the inside air passes through the air flow passage portion 26b for allowing air to pass through a lower side of the heat exchanger for heating, a temperature of the inside air is suitably regulated by the heat exchanger 22 for cooling and the heat exchanger 23 for heating and, thereafter, the inside air is fed from the foot blowoff opening portion 32. Accordingly, the inside air can be circulated so that it is possible to prevent warmed air from leaking to the outside of the cabin and, at the same time, heating of air is performed using the inside air warmer than outside air and hence, an air conditioning operation can be performed with high efficiency.

Still further, according to the air conditioning unit 1 for a vehicle, the air supply unit portion 14 and the air supply unit portion 15 can use the blower 17 in common and hence, the reduction of the number of constitutional parts of the blower 17 such as the drive motor 20 can be reduced.

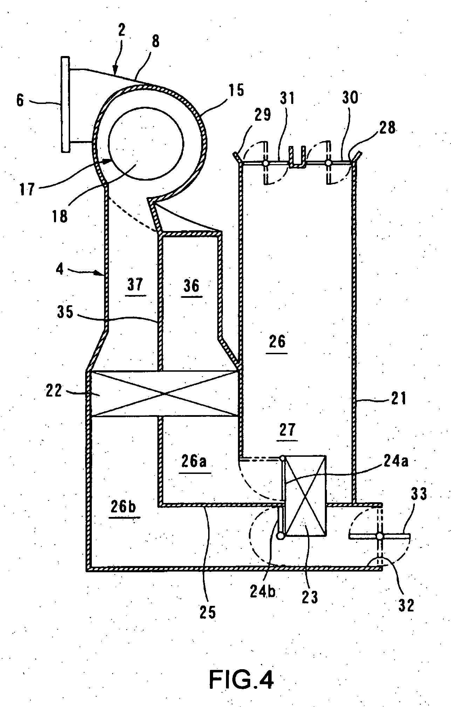

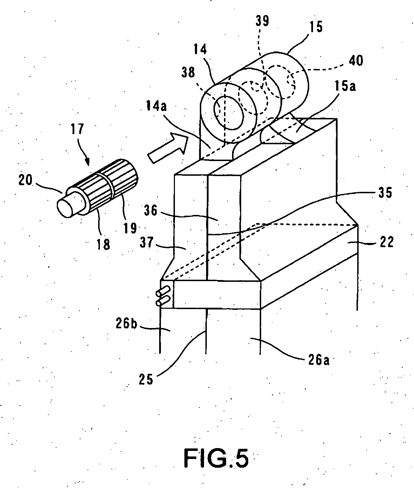

Fig. 4 and Fig. 5 show another example of the constitution of the air conditioning unit for a vehicle according to the embodiment 1 of the present invention. Hereinafter, another example of the embodiment 1 is explained in conjunction with Fig. 4 and Fig. 5. Here, constitutional parts of this example which are substantially equal to the constitutional parts of the air conditioning unit for a vehicle according to the embodiment 1 which have been explained heretofore are given the same symbols in principle, and the explanation of these constitutional parts is omitted.

Another example of the embodiment 1 is intended to be adapted to the constitution where a heat exchanger 22 for cooling is housed in a unit case 21 in a horizontally-laid posture or in a substantially horizontally-laid posture, wherein an air flow passage is divided into a first air flow passage portion 36 and a second air flow passage portion 37 by a dividing portion 35 such that the first air flow passage portion 36 and the second air flow passage portion 37 are arranged parallel to each other along the vehicle advancing direction, and particularly, Fig. 4 and Fig. 5 show a state where an air flow passage is divided into the first air flow passage portion 36 and the second air flow passage portion 37 by the partition portion 35 such that the first air flow passage portion 36 is arranged behind the second air flow passage portion 37 in the vehicle advancing direction.

As shown in Fig. 4 and Fig. 5, the first air flow passage portion 36 is configured to extend in the substantially vehicle vertical direction from a windward side thereof to a leeward side thereof. The windward side of the first air flow passage portion 36 is connected with a nose portion 15a of an air supply unit portion 15, and the leeward side of the first air flow passage portion 36 is connected with a rear-side portion of a windward-side air passage surface of the heat exchanger 22 for cooling in the vehicle advancing direction. Further, as shown in Fig. 4 and Fig. 5, the second air flow passage portion 37 is also configured to extend in the substantially vehicle vertical direction from a windward side thereof to a leeward side thereof. The windward side of the second air flow passage portion 37 is connected with a nose portion 14a of an air supply unit portion 14, and the leeward side of the second air flow passage portion 37 is connected with a front-side portion of a windward-side air passage surface of the heat exchanger 22 for cooling in the vehicle advancing direction.

Due to the above-mentioned constitution, also in another example of the embodiment 1, by connecting an inside air/outside air switching box with the air supply unit portion 15 and by connecting an inside air introducing duct with the air supply unit portion 14, for example, outside air having relatively low humidity flows through the inside air/outside air switching box, the air supply unit portion 15 and the first air flow passage 36 from the outside air introducing port. When the outside air passes through an air flow passage portion 26a for allowing air to pass through an upper side of the heat exchanger for heating, a temperature of the outside air is suitably regulated by the heat exchanger 22 for cooling and a heat exchanger 23 for heating and, thereafter, the outside air is fed out to a defrost blowoff port from a defrost blowoff opening portion 29. Accordingly, it is possible to prevent the formation of a film of moisture on a window glass of a vehicle by moisture in air from the defrost blowoff port. Further, for example, inside air having relatively high humidity flows through the inside air introducing duct, the air supply unit portion 14, and the second air flow passage portion 37 from the inside air introducing port 6. When the inside air passes through the air flow passage portion 26b for allowing air to pass through a lower side of the heat exchanger for heating, a temperature of the inside air is suitably regulated by the heat exchanger 22 for cooling and the heat exchanger 23 for heating and, thereafter, the inside air is fed from a foot blowoff opening portion 32. Accordingly, the inside air can be circulated so that it is possible to prevent warmed air from leaking to the outside of a cabin and, at the same time, heating of air is performed using the inside air warmer than outside air and hence, an air conditioning operation can be performed with high efficiency.

### Embodiment 2

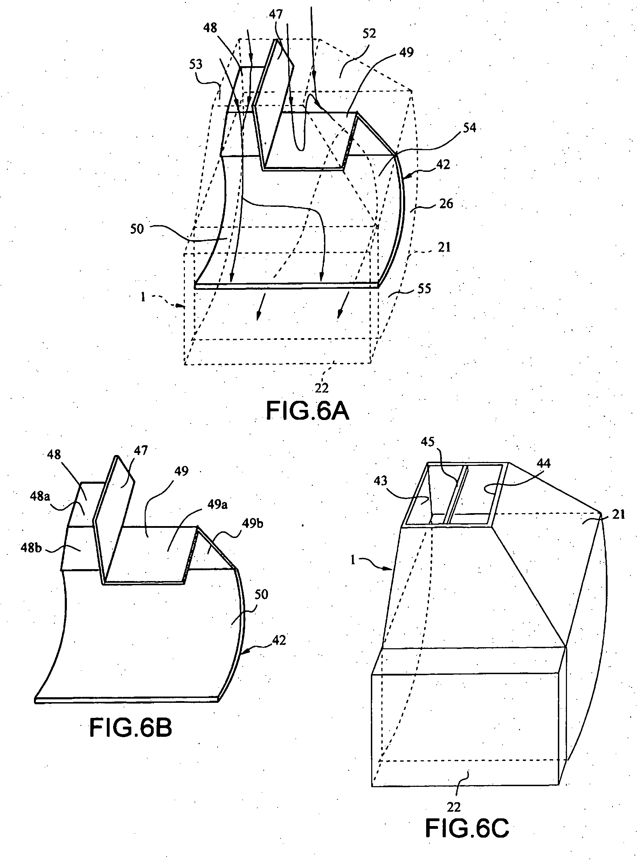

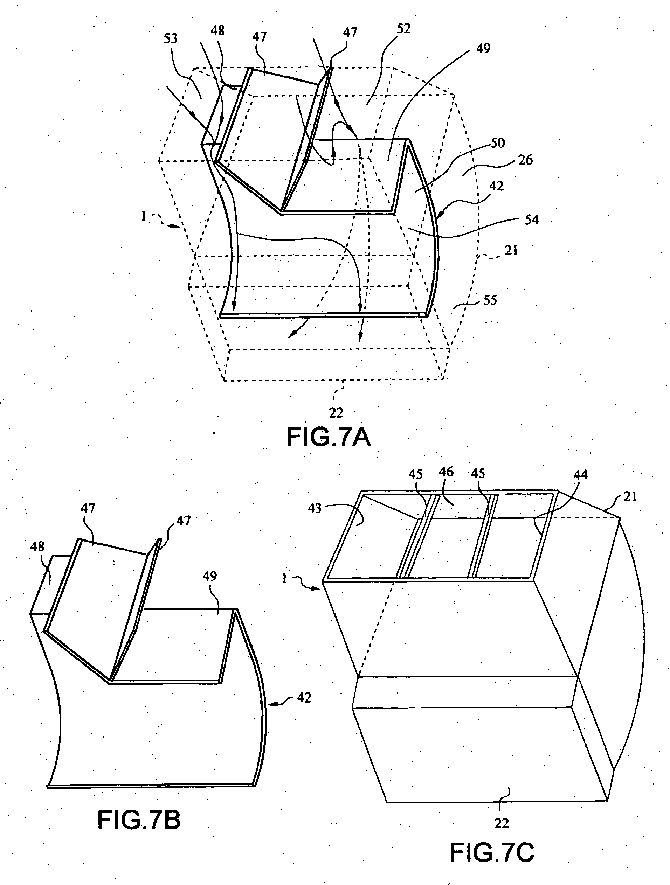

Fig. 6 and Fig. 7 show one example of the constitution of an air conditioning unit 1 for a vehicle according to an embodiment 2 of the present invention ranging from a portion on a leeward side of an air supply unit portion to a heat exchanger 22 for cooling. Hereinafter, the explanation is made with respect to a first example shown in Fig. 6 and a second example shown in Fig. 7. Here, constitutional parts which are substantially equal to the constitutional parts of the embodiment 1 are given the same symbols and the explanation of these constitutional parts is omitted.

An air flow direction change member 42 in either of the first example shown in Fig. 6(b) and the second example shown in Fig. 7(b) is, in the constitution of the air conditioning unit 1 for a vehicle shown in Fig. 1 which is modified such that no dividing portion 35 is provided on a windward side of a heat exchanger 22 for cooling and a leeward-side end of a nose portion 14a of an air supply unit portion 14 and a leeward-side end of a nose portion 15a of an air supply unit portion 15 are not differed from each other along the vehicle advancing direction unlike the structure shown in Fig. 3, housed in an air flow passage portion which is arranged on the leeward side of the air supply unit portion of an air flow passage 26 and on the windward side of the heat exchanger 22 for cooling.

That is, although not shown in the drawings, in the air conditioning unit 1 for a vehicle, the heat exchanger 22 for cooling and the heat exchanger 23 for heating are housed in the inside of the unit case 21, and the air flow passage 26 is partitioned into an air flow passage portion 26a for allowing air to pass through an upper side of the heat exchanger for heating and an air flow passage portion 26b for allowing air to pass through a lower side of the heat exchanger for heating by a partition portion 25 which extends from an intermediate position of a leeward-side air passage surface of the heat exchanger 22 for cooling in the vehicle vertical direction to a position of a windward-side air passage surface of the heat exchanger 23 for heating in the vehicle vertical direction.

Further, although not shown in the drawing, for example, assume the case where the air supply unit portion houses a blower which is constituted of two impellers which are continuously arranged as shown in Fig. 3 and one motor which is positioned on one side in the direction that these impellers are arranged parallel to each other and drives these two impellers therein. In this case, to observe a leeward-side end portion of the air supply unit portion in the unit case 21 in cross section shown in Fig. 6(c), the air supply unit portion can be configured such that two opening portions 43, 44 which open in the vehicle vertical direction are partitioned only by a partition portion 45 so that two opening portions 43, 44 are arranged adjacent to each other.

In the air conditioning unit 1 for a vehicle having such a constitution, the air flow direction change member 42 of the first example shown in Fig. 6(b) is used. The air flow direction change member 42 is basically constituted of dividing portions 47, 50 and change portions 48, 49 respectively.

The dividing portion 47 is provided for dividing and guiding air such that divided air which passes through the opening portion 43 and divided air which passes through the opening portion 44 individually flow downwardly in the vehicle vertical direction. In arranging the dividing portion 47 in the inside of the air flow passage 26, the dividing portion 47 is positioned at an uppermost side of the air flow direction change member 42 in the vehicle vertical direction, and is arranged in an erected manner such that the dividing portion 47 extends downwardly in the vehicle vertical direction using an upper surface thereof extending along the vehicle advancing direction as a base point. The upper surface of the dividing portion 47 can be brought into contact with a lower surface of the partition portion 45 with no gap therebetween. Due to such a constitution, when the air flow direction change member 42 is housed in an air flow passage portion between the heat exchanger 22 for cooling of the air flow passage 26 and the opening portions 43, 44 of the blower 17, the air flow passage portion of the air flow passage 26 is divided by the dividing portion 47 so that a vehicle-right-side flow passage portion 52 and a vehicle-left-side flow passage portion 53 are defined at least in the close vicinity of a leeward side of the opening portions 43, 44, wherein the flow passage portions 52, 53 are arranged parallel to each other in the vehicle widthwise direction. In the first example, the dividing portion 47 straightly extends downwardly in the vertical direction, and is formed of a thin plate having an approximately trapezoidal shape as viewed in the vehicle widthwise direction.

The dividing portion 50 is provided for guiding both airs which pass through the opening portion 43 and air which passes through the opening portion 44 such that the air which passes through the opening portion 43 flows toward a vehicle-upper-side portion of a windward-side air passage surface of the heat exchanger 22 for cooling, and the air which passes through the opening portion 44 flows toward a vehicle-lower-side portion of the windward-side air passage surface of the heat exchanger 22 for cooling. In arranging the dividing portion 50 in the inside of the air flow passage 26, the dividing portion 50 is positioned at a lowermost side of the air flow direction change member 42 in the vehicle vertical direction, and extends in the direction that the dividing portion 50 goes away from the windward-side air passage surface of the heat exchanger 22 for cooling (a front side in the vehicle advancing direction) using an intermediate portion of the windward-side air passage surface of the heat exchanger 22 for cooling in the vertical direction as a base point. A leeward-side surface of the dividing portion 50 can be brought into contact with the windward-side air passage surface of the heat exchanger 22 for cooling with no gap therebetween, and the leeward-side surface of the dividing portion 50 is bent upwardly in the vehicle vertical direction as the dividing portion 50 extends in the direction that the dividing portion 50 goes away from the windward-side air passage surface of the heat exchanger 22 for cooling. Due to such a constitution, when the air flow direction change member 42 is housed in the air flow passage portion formed between the heat exchanger 22 for cooling in the air flow passage 26 and the opening portions 43, 44 of the blower 17, the air flow passage portion of the air flow passage 26 is also divided by the dividing portion 50 so that a vehicle-upper-side flow passage portion 54 and a vehicle-lower-side flow passage portion 55 are defined at least in the close vicinity of a windward side of the heat exchanger 22 for cooling, wherein these flow passage portions 54, 55 are arranged parallel to each other in the vehicle vertical direction in two layers.

The change portion 48 is provided for making air which passes through the opening portion 43 flow smoothly toward.the vehicle-upper-side flow passage portion 54 by preventing the air from flowing toward the vehicle-lower-side flow passage portion 55. In arranging the change portion 48 in the inside of the air flow passage 26, the change portion 48 is positioned between the dividing portion 47 and the dividing portion 50 in the air flow direction change member 42. In this embodiment, the change portion 48 is constituted of: a blocking portion 48a which extends from an end portion which forms a front side in the vehicle advancing direction on a lower side of the dividing portion 47 to a predetermined portion along the vehicle advancing direction thus blocking a portion of the air flow passage 26 which is communicated with the vehicle-lower-side flow passage portion 55 on a left side in the vehicle widthwise direction; and a guide portion 48b which extends from a rear-side portion of the blocking portion 48a in the vehicle advancing direction to an upper-side portion of the dividing portion 50 in the vehicle vertical direction thus guiding air which flows into an upper side of the blocking portion 48a of the change portion 48 from the opening portion 43 toward the vehicle-upper-side flow passage portion 54 side. In the first example, the blocking portion 48a of the change portion 48 has an approximately horizontal plate shape extending along the vehicle advancing direction, and the guide portion 48b of the change portion 48 has a plate shape which is downwardly inclined as the guide portion 48b extends along the vehicle advancing direction from a blocking portion 48a side. Further, the change portion 48 is not limited to the constitution where the blocking portion 48a and the guide portion 48b are clearly differentiated from each other, and may be constituted such that the whole change portion 48 is formed into a horizontal plate shape, an inclined plate shape or the like so that the change portion 48 performs both a function of a blocking portion and a function of a guide portion.

The change portion 49 is provided for making air which passes through the opening portion 44 flow smoothly toward the vehicle-lower-side flow passage portion 55 by preventing the air from flowing toward the vehicle-upper-side flow passage portion 54. In arranging the change portion 49 in the inside of the air flow passage 26, in the same manner as the change portion 48, the change portion 49 is positioned between the dividing portion 47 and the dividing portion 50 in the air flow direction change member 42. In this embodiment, the change portion 49 is constituted of: a blocking portion 49a which extends from an end portion which forms a rear side in the vehicle advancing direction on a lower side of the dividing portion 47 to a predetermined portion along the vehicle advancing direction thus blocking a portion of the air flow passage 26 which is communicated with the vehicle-upper-side flow passage portion 54 on a right side in the vehicle widthwise direction; and a guide portion 49b which extends from a front-side portion of the blocking portion 49a in the vehicle advancing direction to an upper-side portion of the dividing portion 50 in the vehicle vertical direction thus guiding air which flows into an upper side of the blocking portion 49a of the change portion 49 from the opening portion 44 toward the vehicle-lower-side flow passage portion 55 side. In the first example, the blocking portion 49a of the change portion 49 has an approximately horizontal plate shape extending along the vehicle advancing direction in the same manner as the change portion 48, and in the same manner as the change portion 48, the guide portion 49b of the change portion 49 also has a plate shape which is downwardly inclined as the guide portion 49b extends along the vehicle advancing direction from a blocking portion 49a side. Further, in the same manner as the change portion 48, the change portion 49 is not limited to the constitution where the blocking portion 49a and the guide portion 49b are clearly differentiated from each other, and may be constituted such that the whole change portion 49 is formed into a horizontal plate shape, an inclined plate shape or the like so that the change portion 49 performs both a function of a blocking portion and a function of a guide portion.

By constituting the air flow direction change member 42 as described above, for example, in the case where air which passes through the opening portion 43 is outside air introduced from the outside air introducing port which is opened by the selection of the inside air switching door in the inside air/outside air switching box, the outside air which passes through the opening portion 43 flows in the vehicle-left-side flow passage portion 53 toward a lower side in the vehicle vertical direction by being guided by the dividing portion 47, and some of the outside air which flows into an upper side of a region of the vehicle-upper-side flow passage portion 54 directly flows into the vehicle upper-side flow passage 54. With respect to the outside air which flows into an upper side of a region of the vehicle lower-side flow passage 55, the flow of the outside air is changed to the direction toward the vehicle-upper-side flow passage portion 54 (toward a rear side in the vehicle advancing direction) by the change portion 48 so that the outside air flows into the vehicle-upper-side flow passage 54. Accordingly, the outside air which flows into the vehicle-upper-side flow passage portion 54 passes through the vehicle upper-side portion of the air passage portion of the heat exchanger 22 for cooling and, thereafter, flows through the air flow passage portion 26a for allowing air to pass through an upper side of the heat exchanger for heating shown in Fig. 1 and, then, the outside air is heated by the heat exchanger 23 for heating or the outside air bypasses the heat exchanger 23 for heating, and is blown off from the defrost blowoff opening portion 29. Accordingly, it is possible to prevent the formation of a film of moisture on a window glass of a vehicle by moisture in air from the defrost blowoff port.

Further, for example, in the case where air which passes through the opening portion 44 is inside air introduced from the inside air introducing port formed in the inside air introducing duct, the outside air which passes through the opening portion 44 flows in the vehicle-right-side flow passage portion 52 toward a lower side in the vehicle vertical direction by being guided by the dividing portion 47, and some of the inside air which flows into an upper side of a region of the vehicle-lower-side flow passage portion 55 directly flows into the vehicle lower-side flow passage portion 55. With respect to the outside air which flows into an upper side of a region of the vehicle upper-side flow passage portion 54, the flow of the outside air is changed to the direction toward the vehicle-lower-side flow passage portion 55 (toward a front side in the vehicle advancing direction) by the change portion 49 so that the outside air flows into the vehicle-upper-side flow passage portion 55. Accordingly, the inside air which flows into the vehicle-lower-side flow passage portion 55 passes through the vehicle lower-side portion of the air passage portion of the heat exchanger 22 for cooling and, thereafter, flows through the air flow passage portion 26b for allowing air to pass through a lower side of the heat exchanger for heating shown in Fig. 1 and, then, the inside air is heated by the heat exchanger 23 for heating, and is blown off from the foot blowoff opening portion 32. Accordingly, the inside air can be circulated so that it is possible to prevent warmed air from leaking to the outside of a cabin and, at the same time, heating of air is performed using the inside air warmer than outside air and hence, an air conditioning operation can be performed with high efficiency.

On the other hand, although not shown in the drawing, assume a case where the air supply unit portion houses a blower which is constituted of two impellers arranged in a spaced-apart manner with a predetermined distance therebetween and one motor which is arranged between these impellers and drives both impellers therein. In this case, to observe a leeward-side end portion of the air supply unit portion in the unit case 21 in cross section shown in Fig. 7(c), the air supply unit portion can be configured such that three opening portions 43, 44, 46 which open in the vehicle vertical direction can be arranged adjacent to each other by partitioning the opening portion 43 and the opening portion 46 and by partitioning the opening portion 44 and the opening portion 46 respectively using dividing portions 45.

In the air conditioning unit 1 for a vehicle having such a constitution, the air flow direction change member 42 shown in Fig. 7(b) is used. The air flow direction change member 42 is basically constituted of two dividing portions 47, 47, one dividing portion 50, and one change portion 48 and one change portion 49.

Two dividing portions 47, 47 are substantially equal to the dividing portion 47 in the first example with respect to a point that two dividing portions 47, 47 are provided for dividing and guiding air such that divided air which passes through the opening portion 43 and divided air which passes through the opening portion 44 individually flow downwardly in the vehicle vertical direction, and a point that, in arranging the dividing portions 47, 47 in the inside of the air flow passage 26, the dividing portions 47, 47 are positioned at an uppermost side of the air flow direction change member 42 in the vehicle vertical direction. In the second example, however, two dividing portions 47, 47 also perform a partitioning function for preventing air from flowing into the opening portion 43 and the opening portion 44 from the opening portion 46. That is, one dividing portion 47 has an upper surface which extends along the vehicle advancing direction, and the upper surface can be brought into contact with a lower surface of the partition portion 45 which partitions the opening portion 43 and the opening portion 46 with no gap therebetween. One dividing portion 47 is inclined toward a center side in the vehicle widthwise direction with respect to the air conditioning unit 1 for a vehicle, and the other dividing portion 47 has an upper surface which extends along the vehicle advancing direction, and the upper surface can be brought into contact with a lower surface of the partition portion 45 which partitions the opening portion 44 and the opening portion 46 with no gap therebetween and is inclined toward the center side in the vehicle widthwise direction with respect to the air conditioning unit 1 for a vehicle. Accordingly, lower portions of the dividing portions 47, 47 in the vehicle vertical direction are joined to each other thus forming an approximately V shape together.

The dividing portion 50 has the substantially same constitution as the previously-mentioned dividing portion in the first example. That is, the dividing portion 50 is provided for guiding both air which passes through the opening portion 43 and air which passes through the opening portion 44 such that the air which passes through the opening portion 43 flows toward a vehicle-upper-side portion of a windward-side air passage surface of the heat exchanger 22 for cooling and the air which passes through the opening portion 44 flows toward a vehicle-lower-side portion of the windward-side air passage surface of the heat exchanger 22 for cooling. In arranging the dividing portion 50 in the inside of the air flow passage 26, the dividing portion 50 is positioned at a lowermost side of the air flow direction change member 42 in the vehicle vertical direction, and extends in the direction that the dividing portion 50 goes away from the windward-side air passage surface of the heat exchanger 22 for cooling (a front side in the vehicle advancing direction) using a leeward side surface at an intermediate portion of the windward-side air passage surface of the heat exchanger 22 for cooling in the vertical direction as a base point. A leeward-side surface of the dividing portion 50 can be brought into contact with the windward-side air passage surface of the heat exchanger 22 for cooling with no gap therebetween, and the leeward-side surface of the dividing portion 50 is bent upwardly in the vehicle vertical direction as the dividing portion 50 extends in the direction that the dividing portion 50 goes away from the windward-side air passage surface of the heat exchanger 22 for cooling.

The change portion 48 is substantially equal to the change portion in the first example with respect to a point that the change portion 48 is provided for making air which passes through the opening portion 43 flow smoothly toward the vehicle-upper-side flow passage 54 by preventing the air from flowing toward the vehicle-lower-side flow passage 55 side, and a point that the change portion 48 is positioned between the dividing portion 47 and the dividing portion 50 in the air flow direction change member 42 in arranging the change portion 48 in the inside of the air flow passage 26. In this second example, however, the change portion 48 is not clearly divided into a blocking portion and a guide portion, and is formed into a single plate shape which extends horizontally from an end portion which constitutes a front side in the vehicle advancing direction to a center portion in the vehicle advancing direction on a lower side of the dividing portion 47 so that the change portion 48 blocks a portion of the air flow passage 26 which is communicated with the vehicle-lower-side flow passage portion 55 on a left side in the vehicle widthwise direction, and guides air which passes through the opening portion 43 toward a vehicle-upper-side flow passage portion 54 side. The change portion 48 of the second example, however, may be divided into a blocking portion and a guide portion in the same manner as the change portion of the first example.

Also the change portion 49 is substantially equal to the change portion of the previously-mentioned first example with respect to a point that the change portion 49 is provided for making air which passes through the opening portion 44 flow smoothly toward the vehicle-lower-side flow passage portion 55 by preventing the air from flowing toward the vehicle-upper-side flow passage portion 54 side, and a point that the change portion 49 is positioned between the dividing portion 47 and the dividing portion 50 in the air flow direction change member 42 in arranging the change portion 49 in the inside of the air flow passage 26. On the other hand, in the second example, in the same manner as the change portion 48 of the second example, the change portion 49 is not clearly divided into a blocking portion and a guide portion. That is, the change portion 49 is formed into a single plate shape which extends horizontally from an end portion which constitutes a rear side in the vehicle advancing direction to a center portion along the vehicle advancing direction on a lower side of the dividing portion 47 so that the change portion 49 blocks a portion of the air flow passage 26 which is contiguously formed with the vehicle-lower-side flow passage 55 on a left side in the vehicle widthwise direction, and guides air which passes through the opening portion 44 toward a vehicle-upper-side flow passage portion 54 side. The change portion 49 of the second example, however, may be also divided into a blocking portion and a guide portion in the same manner as the change portion of the first example.

By constituting the air flow direction change member 42 as described above, in the case where air which passes through the opening portion 43 is outside air introduced through the substantially same passage as the first example, the outside air which passes through the opening portion 43 flows in the vehicle-left-side flow passage portion 53 toward a lower side in the vehicle vertical direction by being guided by the dividing portion 47, and some of the outside air which flows into an upper side of a region of the vehicle-upper-side flow passage portion 54 directly flows into the vehicle upper-side flow passage portion 54. With respect to the outside air which flows into an upper side of a region of the vehicle lower-side flow passage 55, the flow of the outside air is changed to the direction toward the vehicle-upper-side flow passage portion 54 (toward a rear side in the vehicle advancing direction) by the change portion 48 so that the outside air flows into the vehicle-upper-side flow passage portion 54. Accordingly, also in the second example, the outside air which flows into the vehicle-upper-side flow passage portion 54 passes through the vehicle upper-side portion of the air passage portion of the heat exchanger 22 for cooling and, thereafter, flows through the air flow passage portion 26a for allowing air to pass through an upper side of the heat exchanger for heating shown in Fig. 1 and, then, the outside air is heated by the heat exchanger 23 for heating or the outside air bypasses the heat exchanger 23 for heating, and is blown off from the defrost blowoff opening portion 29. Accordingly, it is possible to prevent the formation of a film of moisture on a window glass of a vehicle by moisture in air from the defrost blowoff port.

Further, in the case where air which passes through the opening portion 44 is inside air introduced through the substantially same passage as the first example, the outside air which passes through the opening portion 44 flows in the vehicle-right-side flow passage portion 52 toward a lower side in the vehicle vertical direction by being guided by the dividing portion 47, and some of the inside air which flows into an upper side of a region of the vehicle-lower-side flow passage portion 55 directly flows into the vehicle lower-side flow passage portion 55. With respect to the outside air which flows into an upper side of a region of the vehicle upper-side flow passage portion 54, the flow of the outside air is changed to the direction toward the vehicle-lower-side flow passage portion 55 (toward a front side in the vehicle advancing direction) by the change portion 49 so that the outside air flows into the vehicle-upper-side flow passage portion 55. Accordingly, also in the second example, the inside air which flows into the vehicle-lower-side flow passage portion 55 passes through the vehicle lower-side portion of the air passage portion of the heat exchanger 22 for cooling and, thereafter, flows through the air flow passage portion 26b for allowing air to pass through a lower side of the heat exchanger for heating shown in Fig. 1 and, then, the inside air is heated by the heat exchanger 23 for heating, and is blown off from the foot blowoff opening portion 32. Accordingly, the inside air can be circulated so that it is possible to prevent warmed inside air from leaking to the outside of a cabin and, at the same time, heating of air is performed using the inside air warmer than outside air and hence, an air conditioning operation can be performed with high efficiency.

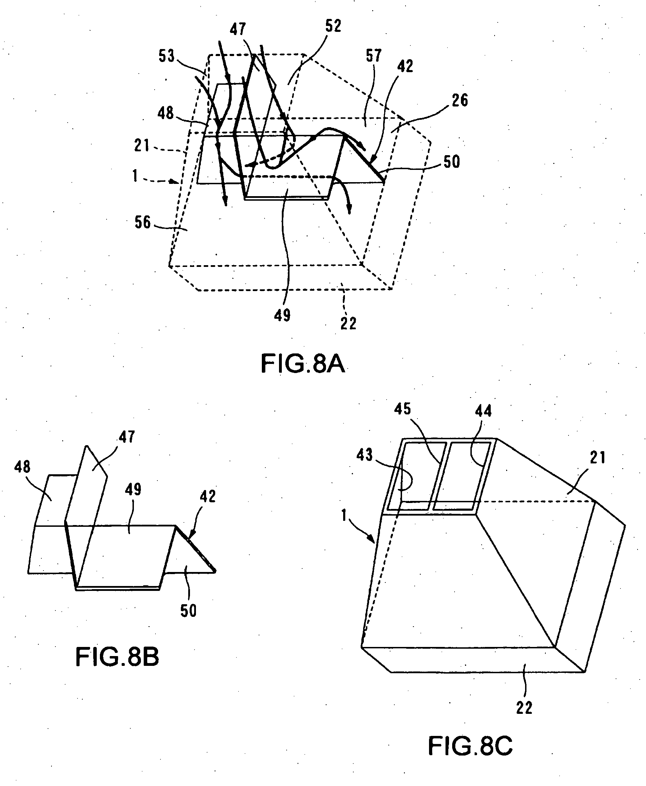

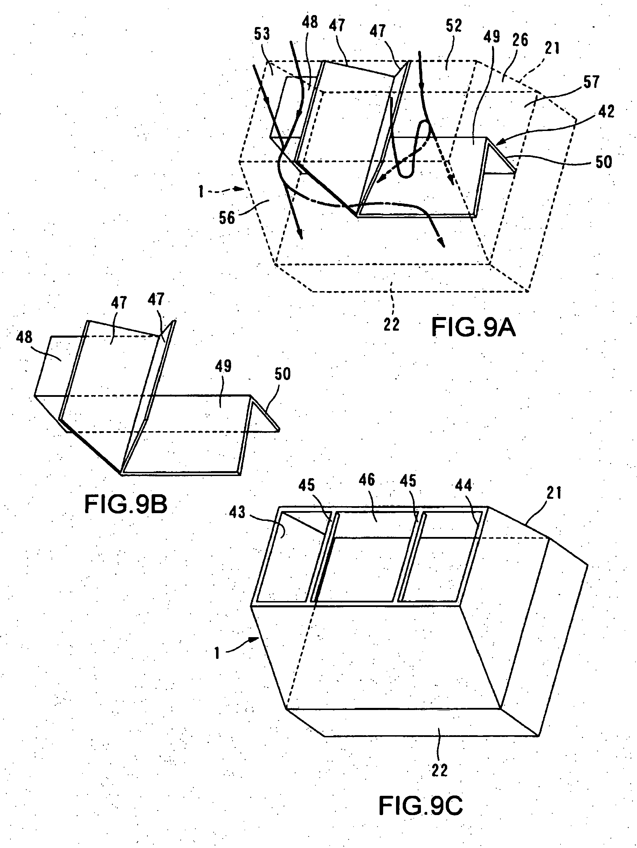

Fig. 8 and Fig. 9 show another example of the constitution of the air conditioning unit for a vehicle according to the embodiment 2 of the present invention. Hereinafter, another example of the embodiment 2 is explained in conjunction with Fig. 8 and Fig. 9. Here, constitutional parts substantially equal to the constitutional parts of the air conditioning unit for a vehicle according to the embodiment 2 which has been explained heretofore are given the same symbols in principle, and the explanation of these constitutional parts is omitted.

Another example of the embodiment 2 is also intended to be adapted to the constitution where a heat exchanger 22 for cooling is housed in a unit case 21 in a horizontally-laid posture or in a substantially horizontally-laid posture. An air flow direction change member 42 has the substantially same constitutions and the substantially same functions as the air flow direction change member 42 which has been explained heretofore as the first example and the second example with respect to a dividing portion 47 and change portions 48, 49 thereof. On the other hand, in another example of the embodiment 2, a dividing portion 50 of the air flow direction change member 42 is provided for guiding both air which passes through an opening portion 43 and air which passes through an opening portion 44 such that the air which passes through the opening portion 43 flows toward a vehicle-rear-side portion of a windward-side air passage surface of a heat exchanger 22 for cooling and the air which passes through the opening portion 44 flows toward a vehicle-front-side portion of the windward-side air passage surface of the heat exchanger 22 for cooling, and as shown in Fig. 8 (b) and Fig. 9(b), the dividing portion 50 of the air flow direction change member 42 is configured to directly extend downwardly along the substantially vehicle vertical direction. Due to such a constitution, an air flow passage portion positioned between a blower 17 of an air flow passage 36 and the heat exchanger 22 for cooling is divided into a vehicle-rear-side flow passage portion 56 and a vehicle-front-side flow passage portion 57 in the vicinity of the heat exchanger 22 for cooling. Further, the vehicle-rear-side flow passage portion 56 is connected with an air flow passage portion 26a for allowing air to pass through an upper side of the heat exchanger for heating, and the vehicle-front-side flow passage portion 57 is connected with an air flow passage portion 26b for allowing air to pass through a lower side of the heat exchanger for heating.

By constituting the dividing portion 50 of the air flow direction change member 42 as described above, in the case where air which passes through the opening portion 43 is outside air, the outside air which passes through the opening portion 44 flows in the vehicle-left-side flow passage portion 53 toward a lower side in the vehicle vertical direction by being guided by the dividing portion 47, and some of the outside air which flows into an upper side of a region of the vehicle-rear-side flow passage portion 56 directly flows into the vehicle rear-side flow passage portion 56. With respect to the outside air which flows into an upper side of a region of the vehicle front-side flow passage portion 57, the flow of the outside air is changed to the direction toward the vehicle-rear-side flow passage portion 56 by the change portion 48 so that the outside air flows into the vehicle-rear-side flow passage portion 56. Accordingly, also in this example, the outside air which flows into the vehicle-rear-side flow passage portion 56 passes through the vehicle rear-side portion of the air passage portion of the heat exchanger 22 for cooling and, thereafter, flows through the air flow passage portion 26a for allowing air to pass through an upper side of the heat exchanger for heating shown in Fig. 1 and, then, the outside air is heated by the heat exchanger 23 for heating or the outside air bypasses the heat exchanger 23 for heating, and is blown off from the defrost blowoff opening portion 29. Accordingly, it is possible to prevent the formation of a film of moisture on a window glass of a vehicle by moisture in air from the defrost blowoff port.

Further, in the case where air which passes through the opening portion 44 is inside air introduced from an inside air introducing port formed in an inside air introducing duct, for example, the outside air which passes through the opening portion 44 flows in the vehicle-right-side flow passage portion 52 toward a lower side in the vehicle vertical direction by being guided by the dividing portion 47, and some of the inside air which flows into an upper side of a region of the vehicle front-side flow passage portion 57 directly flows into the vehicle front-side flow passage portion 57. With respect to the outside air which flows into an upper side of a region of the vehicle-rear-side flow passage portion 56, the flow of the outside air is changed to the direction toward the vehicle front-side flow passage 57 by the change portion 49 so that the outside air flows into the vehicle front-side flow passage portion 57. Accordingly, the inside air which flows into the vehicle front-side flow passage portion 57 passes through the vehicle lower-side portion of the air passage portion of the heat exchanger 22 for cooling and, thereafter, flows through the air flow passage portion 26b for allowing air to pass through a lower side of the heat exchanger for heating shown in Fig. 1 and, then, the inside air is heated by the heat exchanger 23 for heating, and is blown off from the foot blowoff opening portion 32. Accordingly, the inside air can be circulated so that it is possible to prevent warmed air from leaking to the outside of a cabin and, at the same time, heating of air is performed using the inside air warmer than outside air and hence, an air conditioning operation can be performed with high efficiency.

### Reference Signs List

- 1: air conditioning unit for a vehicle
- 2: inside air/outside air switching box
- 3: inside air introducing duct
- 4: air conditioning unit body
- 6: outside air introducing port
- 7: inside air introducing port
- 9: inside and outside air switching door
- 11: inside air introducing port
- 14: air supply unit portion
- 15: air supply unit portion
- 17: blower
- 18: impeller
- 19: impeller
- 20: drive motor
- 21: unit case
- 22: heat exchanger for cooling (heat exchanger)
- 25: partition portion
- 26: air flow passage
- 26a: air flow passage portion for allowing air to pass through an upper side of the heat exchanger for heating
- 26b: air flow passage portion for allowing air to pass through a lower side of the heat exchanger for heating
- 29: defrost blowoff opening portion
- 32: foot blowoff opening portion
- 35: dividing portion
- 36: first air flow passage portion
- 37: second air flow passage portion
- 42: air flow direction change member
- 43: opening portion
- 44: opening portion
- 45: partition portion
- 47: dividing portion
- 48: change portion
- 48a: blocking portion
- 48b: guide portion
- 49: change portion
- 49a: blocking portion
- 49b: guide portion
- 50: dividing portion
- 52: vehicle-right-side flow passage portion
- 53: vehicle-left-side flow passage portion
- 54: vehicle-upper-side flow passage portion
- 55: vehicle-lower-side flow passage portion
- 56: vehicle-rear-side flow passage portion
- 57: vehicle-front-side flow passage portion

## Claims

1. An air conditioning unit for a vehicle comprising (1) :
a first air introducing port (6) which opens on one side of a unit case(21) in the vehicle widthwise direction;
a second air introducing port (7) which opens on the other side of the unit case (21) in the vehicle widthwise direction;
a blower (17) which is constituted of an impeller (18), (19); and a drive motor (20) which has a rotary shaft along the vehicle widthwise direction and imparts a rotational force to the impeller (18), (19), the blower (17) being housed in the unit case (21) at a position between the first air introducing port (6) and the second air introducing port (7);
an air flow passage (26) which is formed in the unit case (21) and through which air introduced from the air introducing port (6), (7) through the blower(17) flows; and
a heat exchanger(22) which is housed in the air flow passage (26) in a state where the heat exchanger (22) is arranged below the blower(17), the heat exchanger(22) having an air passage portion where heat exchange with air which flows through the air flow passage(26) is performed, **characterised in that**
an air flow direction change member (42) is housed in an air flow passage portion of the air flow passage(26) between a leeward side of the blower(17) and a windward side of the heat exchanger (22),
the air flow direction change member (42) includes:
a first dividing portion (47) which divides the air flow passage portion into a vehicle-right-side flow passage portion (52) which is on a right side in the vehicle widthwise direction and a vehicle-left-side flow passage portion(53) which is on a left side in the vehicle widthwise direction such that air which is introduced from one air introducing port (6), (7) and air which is introduced from the other air introducing port (6), (7) flow individually parallel to each other in the vehicle widthwise direction;
a second dividing portion (50) which divides the air flow passage portion into a first air flow passage portion (36) and a second air flow passage portion (37) at upstream of the heat exchanger (22) and downstream of the first dividing portion (47) such that the air which is introduced from one air introducing port (6), (7) passes a portion of the air passage portion of the heat exchanger (22), and air which is introduced from the other air introducing port (6), (7) and does not pass through the portion of the air passage portion of the heat exchanger (22) passes through other portions of the air passage portion of the heat exchanger(22);
a first change portion (49) which introduces air flowing through the vehicle-right-side flow passage portion (52) into one of the first and second air flow passage portions (36), (37) ; and
a second change portion (48) which introduces air flowing through the vehicle-left-side flow passage portion (53) into the other of the first and second air flow passage portions (36), (37).

2. The air conditioning unit for a vehicle (1) according to claim 1, wherein the second dividing portion (50) divides the air flow passage(26) into a vehicle-upper-side flow passage portion (54) which is on an upper side in the vehicle vertical direction and a vehicle-lower-side flow passage portion(55) which is on a lower side in the vehicle vertical direction such that the air which is introduced from one air introducing port (6), (7) passes the air passage portion of the heat exchanger(22), and air which is introduced from the other air introducing port (6), (7) and does not pass through an upper-side air passage portion of the heat exchanger(22) passes through a lower-side air passage portion of the heat exchanger (22),
the first change portion(49) introduces air flowing through the vehicle-right-side flow passage portion(52) into one of the vehicle-upper-side flow passage portion (54) and the vehicle-lower-side flow passage portion (55), and
the second change portion(48) introduces air flowing through the vehicle-left-side flow passage portion(53) into the other of the vehicle-upper-side flow passage portion(54) and the vehicle-lower-side flow passage portion (55).

3. The air conditioning unit for a vehicle according (1) to claim 1, wherein the second dividing portion(50) divides the air flow passage(26) into a vehicle rear-side flow passage portion (56) which is on a rear side in the vehicle longitudinal direction and a vehicle front-side flow passage portion(57) which is on a front side in the vehicle longitudinal direction such that air introduced from one air introducing port (6), (7) passes through an air passage portion of the heat exchanger (22), and air which is introduced from the other air introducing port (6), (7) and does not pass through a rear-side air passage portion of the heat exchanger (22) passes through a front-side air passage portion of the heat exchanger(22),
the first change portion (49) introduces the air flowing through the vehicle right-side flow passage portion (52) into one of the vehicle rear-side flow passage portion (56) and the vehicle front-side flow passage portion(57), and
the second change portion (48) introduces the air flowing through the vehicle left-side flow passage portion(53) into the other of the vehicle rear-side flow passage portion(56) and the vehicle front-side flow passage portion (57).

4. The air conditioning unit for a vehicle (1) according to any one of claims 1 to 3, wherein the blower includes one impeller(18) and one drive motor (20) which drives the impeller(18).

5. The air conditioning unit for a vehicle (1) according to any one of claims 1 to 3, wherein the blower includes two impellers(18), (19) and one drive motor (20) which is arranged between the impellers (18), (19).

## Patentansprüche

1. Klimaanlageneinheit (1) für ein Fahrzeug, umfassend:
eine erste Lufteinführöffnung (6), die sich auf einer Seite eines Einheitsgehäuses (21) in der Fahrzeugbreitenrichtung öffnet;
eine zweite Lufteinführöffnung (7), die sich auf der anderen Seite des Einheitsgehäuses (21) in der Fahrzeugbreitenrichtung öffnet;
ein Gebläse (17), das aus einem Laufrad (18), (19) gebildet ist; und
einen Antriebsmotor (20), der eine Drehwelle entlang der Fahrzeugbreitenrichtung aufweist und dem Laufrad (18), (19) eine Drehkraft verleiht,
wobei das Gebläse (17) in dem Einheitsgehäuse (21) an einer Position zwischen der ersten Lufteinführöffnung (6) und der zweiten Lufteinführöffnung (7) untergebracht ist;
einen Luftströmungskanal (26), der in dem Einheitsgehäuse (21) ausgebildet ist und durch den Luft, die aus der Lufteinführöffnung (6), (7) eingeführt wird, durch das Gebläse (17) strömt; und
einen Wärmetauscher (22), der in dem Luftströmungskanal (26) in einem Zustand untergebracht ist, in dem der Wärmetauscher (22) unter dem Gebläse (17) angeordnet ist,
wobei der Wärmetauscher (22) einen Luftkanalabschnitt aufweist, in dem ein Wärmetausch mit Luft ausgeführt wird, die durch den Luftströmungskanal (26) strömt,
**dadurch gekennzeichnet, dass**
ein Luftströmungs-Richtungsänderungselement (42) in einem Luftströmungskanalabschnitt des Luftströmungskanals (26) zwischen einer dem Wind abgewandten Seite des Gebläses (17) und einer dem Wind zugewandten Seite des Wärmetauschers (22) angeordnet ist,
wobei das Luftströmungs-Richtungsänderungselement (42) Folgendes aufweist:
einen ersten Teilungsabschnitt (47), der den Luftströmungskanalabschnitt in einen Strömungskanalabschnitt (52) auf der rechten Fahrzeugseite, der sich auf einer rechten Seite in der dem Wind zugewandten Fahrzeugrichtung befindet, und einen Strömungskanalabschnitt (53) auf der linken Fahrzeugseite teilt, der sich auf einer linken Seite in der dem Wind zugewandten Fahrzeugrichtung befindet, sodass Luft, die aus der Lufteinführöffnung (6), (7) eingeführt wird, und Luft, die aus der anderen Lufteinführöffnung (6), (7) eingeführt wird, einzeln und parallel zueinander in der dem Wind zugewandten Fahrzeugrichtung strömen;
einen zweiten Teilungsabschnitt (50), der den Luftströmungskanalabschnitt in einen ersten Luftströmungskanalabschnitt (36) und einen zweiten Luftströmungskanalabschnitt (37) stromaufwärts des Wärmetauschers (22) und stromabwärts des ersten Teilungsabschnitts (47) teilt, sodass die Luft, die aus einer Lufteinführöffnung (6), (7) eingeführt wird, durch einen Abschnitt des Luftkanalabschnitts des Wärmetauschers (22) geleitet wird, und Luft, die aus der anderen Lufteinführöffnung (6), (7) eingeführt wird und nicht durch den Abschnitt des Luftkanalabschnitts des Wärmetauschers (22) geleitet wird, durch andere Abschnitte des Luftkanalabschnitts des Wärmetauschers (22) geleitet wird;
einen ersten Änderungsabschnitt (49), der Luft, die durch den Strömungskanalabschnitt (52) auf der rechten Fahrzeugseite strömt, in einen des ersten und des zweiten Luftströmungskanalabschnitts (36), (37) einführt; und
einen zweiten Änderungsabschnitt (48), der Luft, die durch den Strömungskanalabschnitt (53) auf der linken Fahrzeugseite strömt, in den anderen des ersten und des zweiten Luftströmungskanalabschnitts (36), (37) einführt.

2. Klimaanlageneinheit (1) für ein Fahrzeug nach Anspruch 1, wobei der zweite Teilungsabschnitt (50) den Luftströmungskanal (26) in einen Strömungskanalabschnitt (54) auf einer oberen Fahrzeugseite, der sich auf einer oberen Seite in der vertikalen Fahrzeugrichtung befindet, und einen Strömungskanalabschnitt (55) auf der unteren Fahrzeugseite teilt, der auch auf einer unteren Seite in der vertikalen Fahrzeugrichtung befindet, sodass die Luft, die aus einer Lufteinführöffnung (6), (7) eingeführt wird, durch den Luftkanalabschnitt des Wärmetauschers (22) geleitet wird, und Luft, die aus der anderen Lufteinführöffnung (6), (7) eingeführt wird und nicht durch einen Luftkanalabschnitt auf der oberen Seite des Wärmetauschers (22) geleitet wird, durch einen Luftkanalabschnitt auf der unteren Seite des Wärmetauschers (22) geleitet wird,
wobei der erste Änderungsabschnitt (49) Luft, die durch den Strömungskanalabschnitt (52) auf der rechten Fahrzeugseite strömt, in einen des Strömungskanalabschnitts (54) auf der oberen Fahrzeugseite und des Strömungskanalabschnitts (55) auf der unteren Fahrzeugseite einführt; und
wobei der zweite Änderungsabschnitt (48) Luft, die durch den Strömungskanalabschnitt (53) auf der linken Fahrzeugseite strömt, in den anderen des Strömungskanalabschnitts (54) auf der oberen Fahrzeugseite und des Strömungskanalabschnitts (55) auf der unteren Fahrzeugseite einführt.

3. Klimaanlageneinheit (1) für ein Fahrzeug nach Anspruch 1, wobei der zweite Teilungsabschnitt (50) den Luftströmungskanal (26) in einen Strömungskanalabschnitt (56) auf einer hinteren Fahrzeugseite, der sich auf einer hinteren Seite in der Fahrzeuglängsrichtung befindet, und einen Strömungskanalabschnitt (57) auf der vorderen Fahrzeugseite teilt, der sich auch auf einer vorderen Seite in der Fahrzeuglängsrichtung befindet, sodass Luft, die aus einer Lufteinführöffnung (6), (7) eingeführt wird, durch den Luftkanalabschnitt des Wärmetauschers (22) geleitet wird, und Luft, die aus der anderen Lufteinführöffnung (6), (7) eingeführt wird und nicht durch einen Luftkanalabschnitt auf der hinteren Seite des Wärmetauschers (22) geleitet wird, durch einen Luftkanalabschnitt auf der Vorderseite des Wärmetauschers (22) geleitet wird,
wobei der erste Änderungsabschnitt (49) die Luft, die durch den Strömungskanalabschnitt (52) auf der rechten Fahrzeugseite strömt, in einen des ersten Strömungskanalabschnitts (56) auf der hinteren Fahrzeugseite und des Strömungskanalabschnitts (57) auf der vorderen Fahrzeugseite einführt; und
wobei der zweite Änderungsabschnitt (48) die Luft, die durch den Strömungskanalabschnitt (53) auf der linken Fahrzeugseite strömt, in den anderen des Strömungskanalabschnitts (56) auf der hinteren Fahrzeugseite und des Strömungskanalabschnitts (57) auf der vorderen Fahrzeugseite einführt.

4. Klimaanlageneinheit (1) für ein Fahrzeug nach einem der Ansprüche 1 bis 3, wobei das Gebläse ein Laufrad (18) und einen Antriebsmotor (20) aufweist, der das Laufrad (18) antreibt.

5. Klimaanlageneinheit (1) für ein Fahrzeug nach einem der Ansprüche 1 bis 3, wobei das Gebläse zwei Laufräder (18), (19) und einen Antriebsmotor (20) aufweist, der zwischen den Laufrädern (18), (19) angeordnet ist.

## Revendications

1. Unité de climatisation pour un véhicule comprenant (1) :
un premier orifice d'introduction d'air (6) qui débouche d'un côté d'un carter d'unité (21) dans le sens de la largeur du véhicule ;
un second orifice d'introduction d'air (7) qui débouche de l'autre côté du carter d'unité (21) dans le sens de la largeur du véhicule ;
une soufflante (17) qui est constituée d'une roue (18), (19) ; et d'un moteur d'entraînement (20) qui comporte un arbre rotatif s'étendant dans le sens de la largeur du véhicule et communique une force de rotation à la roue (18), (19), la soufflante (17) étant logée dans le carter d'unité (21) au niveau d'une position située entre le premier orifice d'introduction d'air (6) et le second orifice d'introduction d'air (7) ;
un passage d'écoulement d'air (26) qui est formé dans le carter d'unité (21) et à travers lequel s'écoule de l'air, introduit par l'orifice d'introduction d'air (6), (7), en passant par la soufflante (17) ; et
un échangeur thermique (22) qui est logé dans le passage d'écoulement d'air (26) dans un état dans lequel l'échangeur thermique (22) est disposé sous la soufflante (17), l'échangeur thermique (22) comportant une partie de passage d'air dans laquelle est réalisé un échange thermique avec l'air qui s'écoule à travers le passage d'écoulement d'air (26),
**caractérisée en ce que**
un organe de changement de direction d'écoulement d'air (42) est logé dans une partie de passage d'écoulement d'air du passage d'écoulement d'air (26) entre un côté aval de la soufflante (17) et un côté amont de l'échangeur thermique (22),
l'organe de changement de direction d'écoulement d'air (42) comprend :
une première partie de division (47) qui divise la partie de passage d'écoulement d'air en une partie de passage d'écoulement de côté droit du véhicule (52) qui est située sur un côté droit dans le sens de la largeur du véhicule et une partie de passage d'écoulement de côté gauche du véhicule (53) qui est située sur un côté gauche dans le sens de la largeur du véhicule de telle sorte que l'air qui est introduit par un orifice d'introduction d'air (6), (7) et l'air qui est introduit par l'autre orifice d'introduction d'air (6), (7) s'écoulent individuellement de façon parallèle l'un par rapport à l'autre dans le sens de la largeur du véhicule ;
une seconde partie de division (50) qui divise la partie de passage d'écoulement d'air en une première partie de passage d'écoulement d'air (36) et une seconde partie de passage d'écoulement d'air (37) en amont de l'échangeur thermique (22) et en aval de la première partie de division (47) de telle sorte que l'air qui est introduit par un orifice d'introduction d'air (6), (7) passe une partie de la partie de passage d'air de l'échangeur thermique (22), et l'air qui est introduit par l'autre orifice d'introduction d'air (6), (7) et ne passe pas à travers la partie de la partie de passage d'air de l'échangeur thermique (22) passe à travers d'autres parties de la partie de passage d'air de l'échangeur thermique (22) ;
une première partie de changement (49) qui introduit de l'air s'écoulant à travers la partie de passage d'écoulement de côté droit du véhicule (52) dans l'une des première et seconde parties de passage d'écoulement d'air (36), (37) ; et
une seconde partie de changement (48) qui introduit de l'air s'écoulant à travers la partie de passage d'écoulement de côté gauche du véhicule (53) dans l'autre des première et seconde parties de passage d'écoulement d'air (36), (37).

2. Unité de climatisation pour un véhicule (1) selon la revendication 1, dans laquelle la seconde partie de division (50) divise le passage d'écoulement d'air (26) en une partie de passage d'écoulement de côté supérieur du véhicule (54) qui est située sur un côté supérieur dans le sens vertical du véhicule et une partie de passage d'écoulement de côté inférieur du véhicule (55) qui est située sur un côté inférieur dans le sens vertical du véhicule de telle sorte que l'air qui est introduit par un orifice d'introduction d'air (6), (7) passe la partie de passage d'air de l'échangeur thermique (22), et l'air qui est introduit par l'autre orifice d'introduction d'air (6), (7) et ne passe pas à travers une partie de passage d'air de côté supérieur de l'échangeur thermique (22) passe à travers une partie de passage d'air de côté inférieur de l'échangeur thermique (22),
la première partie de changement (49) introduit de l'air s'écoulant à travers la partie de passage d'écoulement de côté droit du véhicule (52) dans l'une de la partie de passage d'écoulement de côté supérieur du véhicule (54) et la partie de passage d'écoulement de côté inférieur du véhicule (55), et
la seconde partie de changement (48) introduit de l'air s'écoulant à travers la partie de passage d'écoulement de côté gauche du véhicule (53) dans l'autre de la partie de passage d'écoulement de côté supérieur du véhicule (54) et la partie de passage d'écoulement de côté inférieur du véhicule (55).

3. Unité de climatisation pour un véhicule (1) selon la revendication 1, dans laquelle la seconde partie de division (50) divise le passage d'écoulement d'air (26) en une partie de passage d'écoulement de côté arrière du véhicule (56) qui est située sur un côté arrière dans le sens longitudinal du véhicule et une partie de passage d'écoulement de côté avant du véhicule (57) qui est située sur un côté avant dans le sens longitudinal du véhicule de telle sorte que de l'air introduit par un orifice d'introduction d'air (6), (7) passe à travers une partie de passage d'air de l'échangeur thermique (22), et de l'air qui est introduit par l'autre orifice d'introduction d'air (6), (7) et ne passe pas à travers une partie de passage d'air de côté arrière de l'échangeur thermique (22) passe à travers une partie de passage d'air de côté avant de l'échangeur thermique (22),
la première partie de changement (49) introduit l'air s'écoulant à travers la partie de passage d'écoulement de côté droit du véhicule (52) dans l'une de la partie de passage d'écoulement de côté arrière du véhicule (56) et la partie de passage d'écoulement de côté avant du véhicule (57), et
la seconde partie de changement (48) introduit l'air s'écoulant à travers la partie de passage d'écoulement de côté gauche du véhicule (53) dans l'autre de la partie de passage d'écoulement de côté arrière du véhicule (56) et la partie de passage d'écoulement de côté avant du véhicule (57).

4. Unité de climatisation pour un véhicule (1) selon l'une quelconque des revendications 1 à 3, dans laquelle la soufflante comprend une roue (18) et un moteur d'entraînement (20) qui entraîne la roue (18).

5. Unité de climatisation pour un véhicule (1) selon l'une quelconque des revendications 1 à 3, dans laquelle la soufflante comprend deux roues (18), (19) et un moteur d'entraînement (20) qui est disposé entre les roues (18), (19).
